# FASCICULE DE BREVET EUROPEEN

(11) **EP 1 196 725 B1**
(45) Date de publication et mention de la délivrance du brevet: **24.03.2004**
(21) Numéro de dépôt: 00946008.0
(22) Date de dépôt: 23.06.2000
(51) Int. Cl.: F25C 3/04

(54) **DISPOSITIF D'ALIMENTATION D'UN CANON A NEIGE**
ZUFÜHRVORRICHTUNG FÜR EINE SCHNEEKANONE
SUPPLY DEVICE FOR SNOW GUN

(30) Priorité: 25.06.1999 FR 9908438
(43) Date de publication de la demande: 17.04.2002
(60) Demande divisionnaire: 02005980.4
(73) Titulaire: York Neige, 44980 Sainte-Luce sur Loire (FR)
(72) Inventeur: DION, Jean-François, F-44830 Brains (FR); JOUNEAU, Pierrick, F-44119 Treillieres (FR)
(74) Mandataire: Michelet, Alain
(86) Numéro de dépôt international: PCT/FR2000/001772
(87) Numéro de publication internationale: WO 2001/001054

(56) Documents cités:
- EP-A- 0 648 964
- DE-C- 4 243 731
- DE-C- 4 402 821
- US-A- 5 031 832
- US-A- 5 718 378

## Description

La présente invention concerne un dispositif d'alimentation pour canon à neige.

Ces matériels sont utilisés dans des conditions très particulières et très sévères sur le plan climatique notamment.

Un exemple de matériel est décrit dans le document FR-2 573 854. Ce document donne le détail d'une installation d'enneigement et en particulier d'un dispositif d'alimentation pour canon à neige du type haute pression.

Pour profiter au mieux des conditions climatiques, il est classique d'utiliser plusieurs canons à neige du type haute pression, ayant chacun des caractéristiques différentes mais complémentaires en terme de débit.

Dans ce cas, chaque canon à neige comporte son propre dispositif d'alimentation, du type de celui décrit dans le document précité.

Ce type de dispositif d'alimentation ne convient plus pour les canons à neige ou dispositifs de pulvérisation, du type de ceux décrits dans le document FR-2 784 905 qui demandent plusieurs alimentations distinctes en eau sous pression, ou pour d'autres types de canons à neige qui fonctionnent sans recourir à un circuit spécial d'air sous pression.

Par ailleurs, il est connu du document EP-A-0 648 964 une vanne comportant un canal traversant, qui constitue l'entrée du fluide et sert également de conduit de transit pour le fluide en question, vanne dans laquelle, dans un cas, le canal est mis en communication avec l'orifice de sortie du fluide et, dans un autre cas, cette sortie est mise en communication avec la purge.

La présente invention propose un dispositif d'alimentation qui permet de répondre aux nouvelles exigences des canons à neige.

Ce dispositif d'alimentation comprend au moins une vanne véhiculant indifféremment de l'eau sous pression ou de l'air sous pression, laquelle vanne comporte, dans un corps monobloc
- un canal traversant qui constitue l'entrée du fluide et sert également de conduit de transit pour le fluide en question,
- un orifice de sortie du fluide, qui se situe au-dessus dudit canal,
- un orifice de purge qui se situe sous ledit canal,
- un forage cylindrique disposé selon un axe perpendiculaire à celui dudit canal, pour loger un tiroir qui est mobile sous l'effet d'un organe moteur, lequel tiroir est aménagé pour, dans un cas, mettre ledit canal en communication avec ladite sortie, et pour, dans un autre cas, mettre cette dernière en communication avec ladite purge afin de vidanger le circuit de sortie du fluide.

De préférence, le dispositif d'alimentation comprend au moins une vanne et en particulier une vanne dont le corps est aménagé au niveaux des deux extrémités du canal de transit, de façon identique, pour permettre indifféremment l'accueil et la fixation soit d'accessoires variés comme des raccords, bouchons, ou autres, soit d'autres corps de vannes.

Cet aménagement du corps de la vanne permet ainsi de juxtaposer, selon les besoins, plusieurs corps formant une sorte de grappe compacte plus facile à installer qu'une multitude de vannes dans les abris ou autres, en bordure des pistes de ski par exemple.

Avantageusement, le tiroir comporte un canal de purge qui est constitué d'un forage axial situé à sa partie inférieure, lequel canal débouche par le biais d'un conduit situé dans un plan radial dudit tiroir, dans le conduit de la sortie pour réaliser la vidange, lequel canal est ouvert ou fermé selon la position dudit tiroir au moyen d'un bouchon qui s'étend axialement à partir de l'extrémité inférieure du corps, et qui coopère avec ledit canal de purge.

De préférence, le tiroir est guidé à sa partie inférieure dans une douille formant une sorte de chemise solidaire du corps de la vanne, laquelle douille comporte un fond ajouré pour permettre l'écoulement du fluide lors de la purge, lequel fond supporte le bouchon de fermeture du canal de purge dudit tiroir.

Avantageusement, le forage cylindrique du corps comporte, entre le canal d'entrée et le conduit de sortie, une zone aménagée en forme de convergent permettant, en coopération avec la partie constituant la soupape du tiroir, de faire varier la section de passage du fluide au fur et à mesure du déplacement dudit tiroir entre une position totalement ouverte à débit maximum et une position fermée, qui interrompt la circulation du fluide à travers ledit corps.

La vanne se présente également sous une forme compacte constituant un véritable module facile à changer en cas d'incident de toute sorte. Ainsi, selon l'invention, les moyens de manoeuvre du tiroir sont constitués d'un motoréducteur qui est logé dans un capot lui-même fixé sur le dessus du corps, lequel capot renferme également le circuit de commande dudit motoréducteur, les fins de course dudit tiroir, le circuit de commande du chauffage du corps, et, éventuellement, les circuits de mesure de pression d'eau dans le canal d'entrée et dans le canal de sortie, l'ensemble des circuits étant rassemblé sur une plaquette en forme de circuit imprimé, laquelle plaquette comporte également les systèmes de fin de course positionnés face à un doigt de manoeuvre solidaire dudit tiroir, et le corps comporte un connecteur ou un orifice passe-fil étanche.

De préférence, les orifices d'entrée et/ou de transit comportent un double alésage cylindrique dont l'un, situé vers l'intérieur, permet d'assurer l'étanchéité avec la pièce ou l'élément associé, et l'autre, situé à l'entrée, la fixation au moyen d'un système de clavetage transverse, lequel système comprend des clavettes du genre aiguilles qui sont diamétralement opposées, guidées dans des orifices du corps débouchant dans l'alésage de l'entrée lesquelles aiguilles coopèrent avec une gorge circulaire aménagée sur la pièce accessoire et en particulier sur la périphérie d'une portion de cylindre qui s'emboîte dans l'alésage d'entrée du corps de la vanne.

Avantageusement, les clavettes sont reliées entre elles, formant une sorte de U qui est fixé sur le corps par tout moyen approprié et de préférence par une vis qui sert en même temps d'organe de blocage de la pièce accessoire par apport au corps de la vanne.

De préférence, les accessoires susceptibles d'être associées au corps de la vanne peuvent consister en une douille de jonction et d'assemblage de deux corps mettant en communication le canal d'alimentation de chacun d'eux, ou encore consister en une douille bouchon qui obture un des orifices du canal d'alimentation ou encore sépare deux corps, l'un pouvant être utilisé pour l'alimentation en eau alors que l'autre est utilisé pour l'alimentation en air du dispositif de pulvérisation.

Avantageusement, les accessoires peuvent également consister en des raccords pour se connecter sur les tubulures d'arrivée d'eau et d'air, lesquels raccords se présentent simplement sous la forme de douilles ou de Té ou encore de coudes, etc ...

L'invention sera encore détaillée à l'aide de la description suivante et des dessins annexés, donnés à titre indicatif et dans lesquels :
- la figure 1 montre schématiquement, en perspective, une vanne du dispositif d'alimentation selon l'invention ;
- la figure 2 montre, en coupe selon un plan vertical passant par l'axe du canal d'alimentation, le corps de la vanne et l'obturateur positionné dans ledit corps ;
- la figure 3 représente, en coupe selon un plan vertical passant par le canal de sortie, la vanne complète avec l'obturateur pour moitié dans une position totalement ouverte et pour moitié dans une position totalement fermée permettant la purge dudit canal de sortie ;
- la figure 4 montre le groupage de vannes entre elles ;
- la figure 5 montre d'une façon partielle l'assemblage d'un corps de vanne avec un accessoire ;
- la figure 6 montre les moyens de verrouillage d'un accessoire sur le corps de vanne et le corps de vanne muni de moyens de verrouillage d'un manchon sur l'orifice de sortie ;
- la figure 7 montre les possibilités de variation de la position angulaire des corps de vanne l'un par rapport à l'autre.

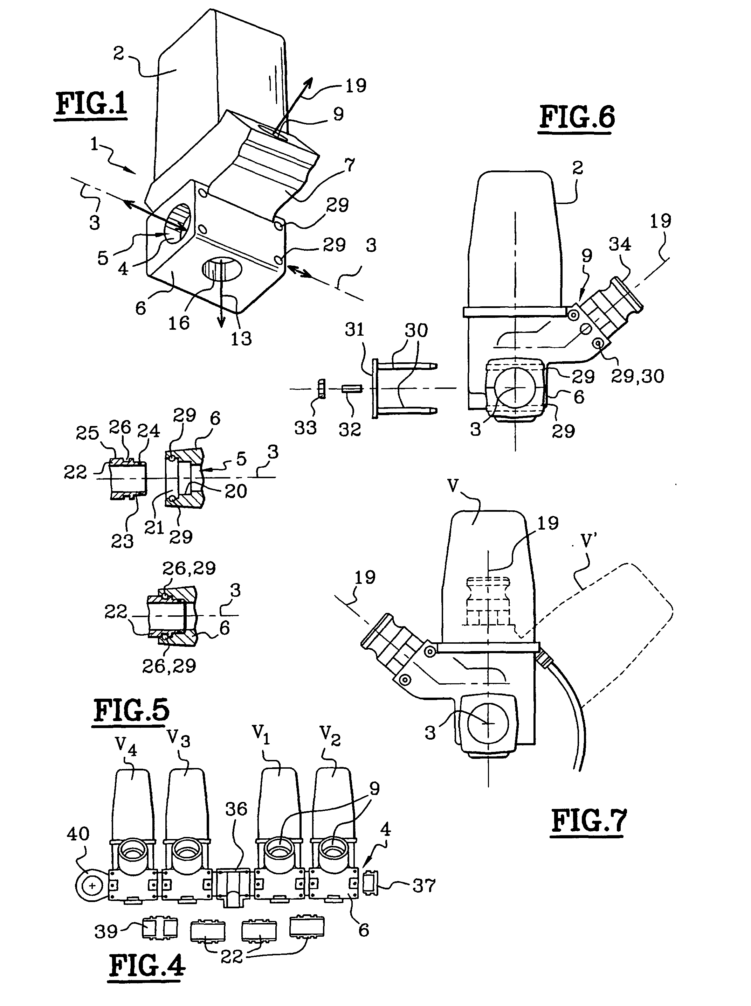

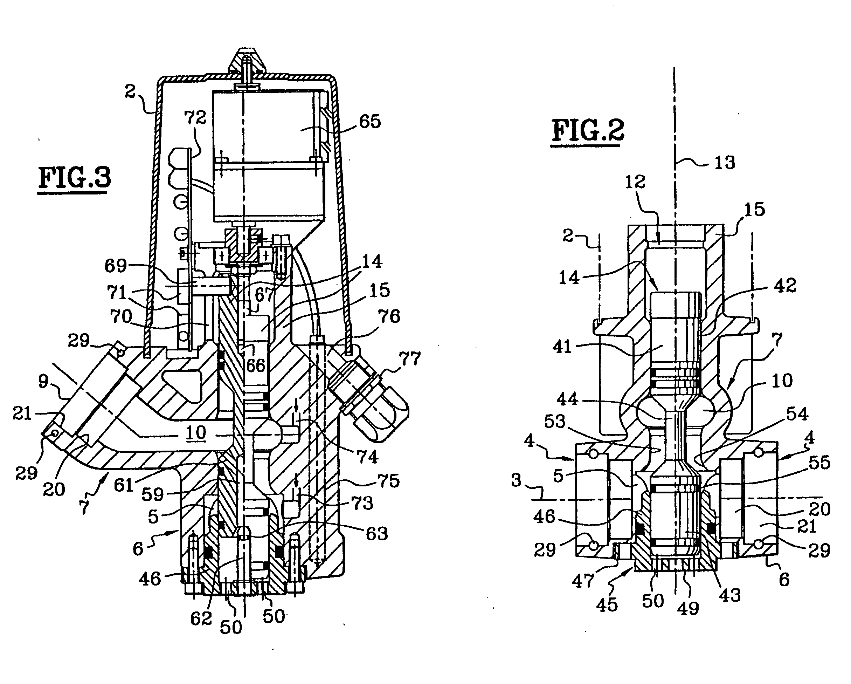

La vanne représentée schématiquement figure 1 comprend un corps 1 surmonté d'un capot 2. Le corps 1 est par exemple réalisé de façon monobloc, en alliage léger genre aluminium obtenu par moulage. Le capot est un capot en matériau plastique par exemple qui renferme comme détaillé plus loin, les mécanismes de manoeuvre et les circuits électriques. Ce capot 2 est monté et fixé de façon étanche sur le dessus du corps 1.

Le corps 1 comporte plusieurs orifices et canaux. On trouve, à sa partie inférieure, centrés sur l'axe 3, des orifices 4 situés de chaque côté du corps aux extrémités d'un canal 5 centré sur l'axe 3, lequel canal 5 constitue le canal d'alimentation ou d'entrée.

Les orifices 4 sont donc des orifices d'entrée mais également de transit, c'est-à-dire permettant l'alimentation d'un corps de vanne juxtaposé comme détaillé plus loin.

Ce canal d'entrée 5 se situe dans une sorte de bloc 6 en forme de parallélépipède qui constitue la partie inférieure du corps 1. Ce bloc 6 est surmonté d'un autre bloc 7 orienté perpendiculairement, qui comporte l'orifice de sortie 9 et renferme un conduit de sortie 10 qui apparaît figure 3.

Ces deux blocs 6 et 7 sont traversés par un forage transverse 12 centré sur un axe 13 perpendiculaire à l'axe 3 du canal 5 du bloc 6. Ce forage cylindrique 12 qui apparaît figures 2 et 3, permet de loger le tiroir 14 qui sera détaillé plus loin.

Ce forage cylindrique 12 s'étend au-dessus du bloc 7 dans une partie cylindrique 15 qui est logée à l'intérieur du capot 2.

La partie inférieure du bloc 6 comporte un orifice 16 qui correspond à l'orifice de purge. Cet orifice 16 se situe dans le prolongement du forage 12, à sa partie inférieure.

On remarque que l'orifice de sortie 9 situé dans le bloc 7, est centré sur un axe 19 qui fait un angle de l'ordre de 45° par rapport à l'axe 13, orienté vers le haut de la vanne. Cet axe 19 et le conduit de sortie 10, sont centrés dans un plan perpendiculaire à l'axe 3, passant par l'axe 13 du forage 12.

On observe sur la figure 1, la compacité de la vanne et son aptitude à former une sorte de module qui permet comme représenté figure 4, de créer un dispositif d'alimentation d'un canon à neige en regroupant plusieurs vannes V1, V2, V3, V4, afin de réaliser à partir d'une seule et même alimentation générale en eau et en air, une distribution d'eau et d'air à des pressions et débits choisis selon les besoins.

La juxtaposition des corps de vannes est permise au moyen d'un aménagement des orifices 4 situés de part et d'autre du bloc 6 de la vanne. Ces orifices 4 comportent un alésage interne 20 à l'extrémité du canal 5 et un alésage externe 21 à proximité de la face d'extrémité du bloc 6. Cet aménagement de l'orifice 4 permet d'accueillir des accessoires divers comme par exemple une douille 22 telle que représentée partiellement figure 5. Cette douille 22, de forme tubulaire, comporte à l'une de ses extrémités une portion de cylindre 23 muni d'un joint torique 24 qui coopère avec l'alésage interne 20 aménagé au niveau de l'orifice 4. Cette portion cylindrique 23 est suivie d'une seconde portion cylindrique 25 munie d'une gorge 26. Cette seconde portion cylindrique 25 coopère avec l'alésage externe 21 de l'orifice 4.

Cet alésage 21 comporte des trous 29, diamétralement opposés et parallèles entre eux, centrés dans un plan perpendiculaire à l'axe 3. Ces trous permettent le passage de clavettes 30 qui se présentent sous la forme d'aiguilles. Les orifices 29 débouchent dans l'alésage 21, permettant aux aiguilles 30 de se positionner dans la gorge 26 aménagée au niveau du cylindre 25 de l'accessoire 22, verrouillant cet accessoire dans l'orifice 4.

Comme représenté figure 6, les aiguilles 30 sont reliées entre elles par une barrette 31 qui permet de les immobiliser en position active au moyen - d'une vis 32 qui se loge dans le corps 1, dans un filetage approprié et - d'un écrou 33 qui serre l'ensemble. La vis 32 peut également permettre de verrouiller la position de l'accessoire 22 pour l'empêcher de tourner dans l'orifice 4, autour de l'axe 3.

Toujours figure 6, les aiguilles 30 sont représentées en face des trous 29 aménagés de part et d'autre de l'orifice 4 dans le bloc 6.

Cet aménagement des orifices 4 se retrouve de la même façon au niveau de la sortie 9 du corps 1. Aussi, les mêmes aiguilles 30 apparaissent en position normale de blocage d'un accessoire 34 constitué d'un raccord mâle positionné au niveau de la sortie 9 du corps.

La figure 7 fait apparaître, vues de côté, une vanne V représentée en traits forts et une seconde vanne V' couplée à la première, représentée en traits mixtes fins et inclinée par rapport à la première selon un angle de 30°. Cette possibilité de faire varier l'angle des axes de sortie 19 de chacune des vannes simplifie les connexions desdites vannes avec les tubulures d'alimentation du-ou-des canons à neige.

Cette possibilité de variation angulaire est toutefois limitée par la nécessité de conserver un écoulement gravitaire afin de purger le circuit de sortie.

La figure 4 montre plusieurs sortes d'accessoires qui permettent de grouper des vannes V1, V2, V3, V4 pour former un dispositif d'alimentation.

Ainsi, on trouve un accessoire 36 en forme de Té situé au milieu des deux groupes de vannes. Cet accessoire 36 permet d'alimenter les différentes vannes et en particulier les vannes V1, V2 situées à sa droite sur la figure et la vanne V3 de gauche.

Les corps du couple de vannes V1, V2, sont solidaires au moyen d'un accessoire 22 en forme de simple douille comme illustré figure 5. A l'extrémité, sur la vanne V2, on remarque la présence d'un accessoire 37 en forme de bouchon qui obture l'orifice 4 du corps 1. La vanne V2 est alimentée à travers la vanne V1.

La vanne V1 est fixée au Té 36 au moyen d'une douille 22 identique à celle qui est disposée entre les vannes V1 et V2.

La vanne V3 située à gauche du Té 36 sur la figure est également fixée à ce Té 36 au moyen d'une douille 22. La vanne V3 est alimentée en eau également à travers le Té 36.

La vanne V4 groupée avec les autres vannes, est utilisée pour contrôler le passage de l'air comprimé.

Cette vanne V4 est fixée sur la vanne V3 au moyen d'une douille bouchon 39 qui permet d'obturer un des orifices 4 de la vanne V3 et de la vanne V4 simultanément.

La vanne V4 est alimentée sur son côté gauche au moyen d'un accessoire 40 en forme de coude par exemple.

Les figures 2 et 3 montrent, d'une façon plus détaillée, les éléments internes constitutifs de la vanne. Le tiroir 14 comporte une partie cylindrique 41 guidée dans la partie supérieure du corps 1 dans un alésage 42 du forage cylindrique 12. La partie inférieure du tiroir 14 se présente sous la forme d'une soupape cylindrique 43 reliée à la partie cylindrique 41 par une tige 44 dont le diamètre est de l'ordre de la moitié de celui desdites parties cylindriques.

Les deux parties cylindriques 41 et 43 ont le même diamètre.

La partie cylindrique 43 fait office de soupape et elle est guidée dans une douille ou chemise 45 qui se positionne au niveau de l'orifice de purge 16. Cette chemise 45 comporte une partie cylindrique 46 qui s'insère dans le bloc 6 et même dans le canal 5 avec une forme qui autorise la circulation de l'eau dans ledit canal 5. Une collerette 47 permet de fixer cette chemise 45 à la partie inférieure du bloc 6 et le fond 49 de ladite chemise comporte des orifices 50 qui permettent l'évacuation de l'eau lors de la purge.

La purge sera détaillée plus loin en liaison avec la figure 3.

La partie formant soupape 43 se déplace dans le corps 1 et en particulier dans l'alésage 53 qui se situe entre le canal d'alimentation 5 et le conduit de sortie 10. L'entrée 54 de cet alésage 53 est façonnée en forme de convergent de façon à permettre un réglage du débit entre le canal 5 et le conduit de sortie 10. Ce réglage du débit s'effectue par le déplacement du tiroir 14 entre la position ouverte comme représenté figure 2 et une position fermée dans laquelle le joint supérieur 55 de la soupape 43 isole le canal d'alimentation 5 par rapport au conduit de sortie 10.

La figure 3 montre le tiroir 14 par moitié ; la moitié côté droit de la figure étant en position normale ouverte comme pour la figure 2 alors que la moitié gauche sur la figure 3 est en position normale d'obturation du passage entre le canal d'entrée 5 et le conduit de sortie 10.

On remarque que la soupape 43 comporte un canal interne 59 qui permet d'effectuer la purge du circuit de sortie. Ce canal 59 comprend un alésage de la partie centrale de la soupape 43 et un conduit oblique 61 qui le relie au conduit de sortie 10. On remarque que dans cette position de fermeture du tiroir, l'eau peut s'écouler par le canal de purge 59, et s'évacuer par les orifices 50 aménagés dans le fond 49 de la chemise 45.

Le fond 49 comporte un bouchon 62 qui s'étend axialement dans le canai de purge 59. Ce bouchon 62, muni d'un joint torique 63 à son extrémité, obture le canal de purge 59 lorsque la soupape 43 est ouverte dans une position qui permet le passage de l'eau ou de l'air entre le canal d'entrée 5 et le conduit de sortie 10. En revanche, en position normale de fermeture de la vanne, le bouchon 62 ouvre le canal 59 et permet ainsi une purge automatique du circuit de sortie.

Le tiroir 14 se déplace sous l'effet d'un organe de manoeuvre constitué d'un motoréducteur 65. Ce motoréducteur 65 est solidaire du corps 1 et il est en particulier bridé sur l'extrémité supérieure du cylindre 15 qui prolonge ledit corps à l'intérieur du capot 2. Le tiroir 14 comporte un alésage interne 66 qui est fileté et coopère avec la vis 67 entraînée par le motoréducteur 65.

Le tiroir 14 comporte à son extrémité supérieure un doigt 69 qui est guidé verticalement dans une lumière 70 du cylindre 15 Ce doigt 69 permet également de déclencher des dispositifs fin de course 71. Ces dispositifs fin de course sont disposés sur une plaquette 72 aménagée en forme de circuit imprimé sur laquelle sont rassemblés les différents composants qui permettent de faire fonctionner la vanne et aussi de recueillir les paramètres liés au fonctionnement de cette vanne.

Ainsi, on trouve dans la vanne, des capteurs de pression 73 et 74. Ces capteurs de pression sont en communication avec, d'une part, le canal d'alimentation 5 et d'autre part, le conduit de sortie 10.

Le corps 1 est également muni d'une résistance chauffante 75 dont le fonctionnement est commandé à partir de la platine 72.

Le corps 1 comporte un orifice 76 qui permet le passage des fils d'alimentation et/ou de commande liée à la platine 72. Un connecteur 77 ou un passe-fils permet de relier la vanne à un tableau de commande générale qui gère le fonctionnement du ou des canons à neige.

## Revendications

1. Dispositif d'alimentation pour canon à neige comprenant au moins une vanne véhiculant indifféremment de l'eau sous pression ou de l'air sous pression, laquelle vanne comporte dans un corps monobloc (1) :
- un canal (5) traversant, qui constitue l'entrée du fluide et sert également de conduit de transit pour le fluide en question,
- un orifice de sortie (9) du fluide, qui se situe au-dessus dudit canal (5),
- un orifice de purge (16) qui se situe sous ledit canal (5),
- un forage cylindrique (12) disposé selon un axe perpendiculaire à l'axe (3) dudit canal (5), dans lequel est logé un tiroir (14) qui est mobile sous l'effet d'un organe de manoeuvre (65), lequel tiroir est aménagé pour, dans un cas, mettre ledit canal (5) en communication avec ladite sortie (9) et pour, dans un autre cas, mettre cette sortie (9) en communication avec ladite purge (16) afin de vidanger le circuit de sortie du fluide.

2. Dispositif d'alimentation d'un canon à neige selon la revendication 1, **caractérisé en ce qu'**il comprend au moins une vanne dont le corps (1) est aménagé au niveau des deux extrémités du canal (5), de façon identique, pour permettre, indifféremment, l'accueil et la fixation soit d'accessoires variés comme des raccords, bouchons, ou autres, soit d'autres corps de vannes.

3. Dispositif d'alimentation d'un canon à neige selon l'une quelconque des revendications 1 ou 2, **caractérisée en ce que** le tiroir (14) comporte un canal de purge (59) qui est constitué d'un forage axial situé à sa partie inférieure, débouchant par le biais d'un conduit (61) dans le conduit (10) de la sortie (9) pour réaliser la vidange, lequel canal (59) est ouvert ou fermé selon la position de l'obturateur au moyen d'un bouchon (62) qui s'étend axialement à partir de l'extrémité inférieure du corps de la vanne.

4. Dispositif d'alimentation d'un canon à neige selon la revendication 3, **caractérisé en ce que** le tiroir (14) est guidé à sa partie inférieure, dans une chemise (45) qui est solidaire du corps (1), laquelle chemise comporte un fond (49) ajouré pour permettre l'écoulement du fluide en cas de purge, lequel fond supporte le bouchon (62) qui ferme le canal de purge (59) lorsque le tiroir est en position inactive d'obturation.

5. Dispositif d'alimentation d'un canon à neige selon l'une quelconque des revendications 1 à 4, **caractérisé en ce que** le forage cylindrique (12) du corps (1) entre le canal d'entrée (4) et le conduit (10) de la sortie (9), comporte une zone (54) aménagée en forme de convergent permettant, en coopération avec la partie cylindrique (43) constituant la soupape de l'obturateur, de faire varier la section de passage du fluide au fur et à mesure du déplacement dudit obturateur entre une position totalement ouverte et sa position fermée.

6. Dispositif d'alimentation d'un canon à neige selon l'une quelconque des revendications 1 à 5, **caractérisé en ce que** les moyens de commande du tiroir (14) sont constitués d'un motoréducteur (65) logé dans un capot (2) qui est fixé sur le dessus du corps (1), de façon étanche, lequel capot renferme également une platine (72) sur laquelle sont rassemblés sous forme de circuit imprimé les différents circuits de commande dudit motoréducteur, les circuits liés au système de fin de course (71) déclenchés par un doigt (69) fixé à l'extrémité supérieure dudit obturateur (14), le circuit de commande de la résistance (75) servant à réchauffer le corps pour éviter les problèmes de gel et, éventuellement, les circuits de mesure de la pression dans le canal d'entrée (5) et dans le canal de sortie (10), lequel corps étant muni d'un connecteur (77) ou d'un passe-fil étanche.

7. Dispositif d'alimentation d'un canon à neige selon l'une quelconque des revendications 1 à 6, **caractérisé en ce que** les orifices (4) du canal (5) servant d'entrée et/ou de transit, comportent un double alésage cylindrique (20, 21) dont l'un permet d'assurer l'étanchéité et l'autre la fixation des accessoires associés au corps (1), lesquels moyens de fixation sont constitués d'un système de clavettes (30) en forme d'aiguilles, lesquelles aiguilles sont diamétralement opposées dans des trous (29) qui débouchent dans l'alésage externe (21) et permettent auxdites aiguilles de coopérer avec une gorge (26) aménagée sur la partie cylindrique correspondante (25) dudit accessoire.

8. Dispositif d'alimentation d'un canon à neige selon la revendication 7, **caractérisée en ce que** les clavettes (30) sont solidaires, formant une sorte de U susceptible d'être fixé sur le corps par tout moyen approprié, en particulier par une vis (32) qui réalise simultanément l'immobilisation par serrage de l'accessoire verrouillé par lesdites clavettes.

9. Dispositif d'alimentation d'un canon à neige selon l'une quelconque des revendications 7 ou 8, **caractérisée en ce que** l'accessoire associable au corps (1) se présente soit sous la forme d'un bouchon (37), soit sous la forme d'une douille tubulaire (22) qui permet d'associer et de juxtaposer deux corps (1), soit sous la forme d'une douille bouchon (39) qui permet d'associer deux corps (1) tout en séparant les fluides de chaque corps, soit une pièce de raccordement en forme de Té (36) ou de douille (34) ou encore de coude (40).

## Patentansprüche

1. Zuführvorrichtung für eine Schneekanone, umfassend mindestens ein Ventil, das unterschiedslos Wasser unter Druck oder Luft unter Druck befördert, wobei dieses Ventil in einem einstückigen Körper (1) umfasst:
- einen durchgehenden Kanal (5), der den Fluideingang darstellt und auch als Durchgangsleitung für das betreffende Fluid dient,
- eine Ausgangsöffnung (9) für das Fluid, die sich über dem Kanal (5) befindet,
- eine Reinigungsöffnung (16), die sich unter dem Kanal (5) befindet,
- eine zylindrische Bohrung (12), die entlang einer zur Achse (3) des Kanals (5) senkrechten Achse angeordnet ist, in der ein Schieber (14) angeordnet ist, der unter der Wirkung eines Betätigungselements (65) beweglich ist, wobei der Schieber derart angeordnet ist, dass er in einem Fall den Kanal (5) mit dem Ausgang (9) in Verbindung bringen kann, und dass er in einem weiteren Fall diesen Ausgang (9) mit der Reinigungsöffnung (16) in Verbindung bringen kann, um die Ausgangsleitung für das Fluid zu entleeren.

2. Zuführvorrichtung für eine Schneekanone nach Anspruch 1, **dadurch gekennzeichnet, dass** sie mindestens ein Ventil umfasst, dessen Körper (1) auf Höhe der beiden Enden des Kanals (5) auf identische Weise angeordnet ist, um unterschiedslos die Aufnahme und Befestigung entweder von verschiedenen Zubehörteilen, wie Anschlüssen, Stöpseln oder dergleichen, oder von anderen Ventilkörpern zu ermöglichen.

3. Zuführvorrichtung für eine Schneekanone nach einem der Ansprüche 1 oder 2, **dadurch gekennzeichnet, dass** der Schieber (14) einen Reinigungskanal (59) umfasst, der aus einer Axialbohrung gebildet ist, die sich an seinem unteren Teil befindet und über eine Leitung (61) in die Leitung (10) des Ausgangs (9) mündet, um die Entleerung durchzuführen, wobei der Kanal (59) je nach Position des Verschlusses mittels eines Stöpsels (62), der sich axial ab dem unteren Ende des Körpers des Ventils erstreckt, offen oder geschlossen ist.

4. Zuführvorrichtung für eine Schneekanone nach Anspruch 3, **dadurch gekennzeichnet, dass** der Schieber (14) an seinem unteren Teil in einer Hülse (45) geführt wird, die mit dem Körper (1) verbunden ist, wobei die Hülse einen durchbrochenen Boden (49) umfasst, um das Abfließen des Fluids im Falle einer Reinigung zu ermöglichen, wobei der Boden den Stöpsel (62) trägt, der den Reinigungskanal (59) schließt, wenn sich der Schieber in der inaktiven Verschlussposition befindet.

5. Zuführvorrichtung für eine Schneekanone nach einem der Ansprüche 1 bis 4, **dadurch gekennzeichnet, dass** die zylindrische Bohrung (12) des Körpers (1) zwischen dem Eingangskanal (4) und der Leitung (10) des Ausgangs (9) eine Zone (54) umfasst, die in konvergierender Form ausgespart ist und es ermöglicht, durch Zusammenwirken mit dem zylindrischen Teil (43), der das Ventil des Verschlussmittels bildet, den Durchgangsquerschnitt des Fluids im Zuge der Verschiebung des Verschlussmittels zwischen einer völlig offenen Position und seiner geschlossenen Position zu variieren.

6. Zuführvorrichtung für eine Schneekanone nach einem der Ansprüche 1 bis 5, **dadurch gekennzeichnet, dass** die Mittel zur Steuerung des Schiebers (14) aus einem Getriebemotor (65) gebildet sind, der in einer Haube (2) angeordnet ist, die auf dem Oberteil des Körpers (1) dicht befestigt ist, wobei die Haube auch eine Platte (72) umfasst, auf der in Form einer gedruckten Schaltung die verschiedenen Steuerschaltungen des Getriebemotors zusammengefasst sind, die Schaltungen, die mit dem Anschlagsystem (71) verbunden sind, die durch einen Finger (69) ausgelöst werden, der am oberen Ende des Verschlussmittels (14) befestigt ist, die Schaltung zur Steuerung des Widerstandes (75), der dazu dient, den Körper zu erhitzen, um die Probleme des Gefrierens zu vermeiden, und eventuell die Schaltungen zum Messen des Drucks in dem Eingangskanal (5) und in dem Ausgangskanal (10), wobei der Körper mit einem Schalter (77) oder einer dichten Drahtdurchführung versehen ist.

7. Zuführvorrichtung für eine Schneekanone nach einem der Ansprüche 1 bis 6, **dadurch gekennzeichnet, dass** die Öffnungen (4) des Kanals (5), die als Eingang und/oder Durchgang dienen, eine doppelte zylindrische Bohrung (20, 21) umfassen, von denen es eine ermöglicht, die Dichtigkeit sicher zu stellen, und die andere, die Befestigung der mit dem Körper (1) verbundenen Zubehörteile zu gewährleisten, wobei die Befestigungsmittel aus einem Keilsystem (30) in Form von Nadeln gebildet sind, wobei die Nadeln einander diametral in Löchern (29) gegenüber liegen, die in die äußere Bohrung (21) münden und es den Nadeln ermöglichen, mit einer Rille (26) zusammenzuwirken, die an dem entsprechenden zylindrischen Teil (25) des Zubehörs vorgesehen ist.

8. Zuführvorrichtung für eine Schneekanone nach Anspruch 7, **dadurch gekennzeichnet, dass** die Keile (30) festverbunden sind und eine Art U bilden, das auf dem Körper durch jedes geeignete Mittel befestigt werden kann, insbesondere durch eine Schraube (32), die gleichzeitig die Feststellung durch Festklemmen des durch die Keile verriegelten Zubehörs durchführt.

9. Zuführvorrichtung für eine Schneekanone nach Anspruch 7 oder 8, **dadurch gekennzeichnet, dass** das mit dem Körper (1) verbindbare Zubehör entweder in Form eines Stöpsels (37) oder in Form einer rohrförmigen Buchse (22) vorhanden ist, der bzw. die es ermöglicht, zwei Körper (1) zu verbinden und nebeneinander anzuordnen, entweder in Form einer Stöpselbuchse (39), die es ermöglicht, zwei Körper (1) bei Trennung der Fluide jedes Körpers zu verbinden, oder in Form eines Anschlussteils in T-Form (36) oder einer Buchse (34) oder auch eines Kniestücks (40).

## Claims

1. A Supply device for a snow gun comprising at least one valve for circulating either pressurised water or pressurised air, which valve comprises, in a single piece body (1):
- a through channel (5) forming the fluid intake and also serving as a through passage for the said fluid,
- a fluid outlet port (9), situated above the said channel (5),
- a bleed orifice (16) beneath the said channel (5),
- a cylindrical bore (12) arranged according to an axis perpendicular to the axis (3) of the said channel (5), in which a slide valve (14) is accommodated, which is mobile under the effect of a control member (65), which slide valve is provided to, in one hand, put the said channel (5) in communication with the said outlet port (9), and to, in another hand, put the said outlet port (9) in communication with the said bleed orifice (16) in order to drain the fluid outlet system.

2. A Supply device for a snow gun according to claim 1, **characterised in that** it comprises at least one valve whose body (1) is arranged at the level of both ends of the channel (5), in an identical fashion, for accommodating and fixing either various accessories such as connectors, plugs or others, or other valve bodies.

3. A Supply device for a snow gun according to any one of claims 1 or 2, **characterised in that** the slide valve (14) comprises a bleed channel (59) consisting of an axial bore located at its lower section, leading via a conduit (61) into the duct (10) of the outlet port (9) to perform the draining, which channel (59) is open or closed according to the position of the said slide valve by means of a plug (62) extending axially from the lower end of the valve body.

4. A Supply device for a snow gun according to claim 3, **characterised in that** the slide valve (14) is guided at its lower end into a jacket (45) integral with the body (1), which jacket comprises a punched bottom (49) to enable the fluid to flow during the said draining, which bottom supports the plug (62) which closes the bleed channel (59) when the slide valve is in inactive blanking off position.

5. A Supply device for a snow gun according to any one of claims 1 to 4, **characterised in that** the cylindrical bore (12) of the body (1) between the intake channel (4) and the duct (10) of the outlet port (9), comprises an area (54) provided in the form of a mixer enabling, in co-operation with the cylindrical section (43) forming the plug of the slide valve, to vary the through opening of the fluid as the slide valve moves between a completely open position and its closed position.

6. A Supply device for a snow gun according to any one of claims 1 to 5, **characterised in that** the control means of the slide valve (14) comprises a reduction gear (65) located in a cap (2) that is attached to the top of the body (1), in a tight fashion, which cap also comprises a mechanism plate (72) on which are gathered in the form of an integrated circuit the various control systems of the said reduction gear, the circuits associated with the limit switches (71) triggered by a finger (69) attached to the upper end of the said slide valve (14), the control circuit of the resistor (75) serving to re-heat the body to prevent frost problems and, possibly, the water pressure measuring circuits in the intake channel (5) and in the outlet channel (10), whereas the body is provided with a connector (77) or a tight grommet orifice.

7. A Supply device for a snow gun according to any one of claims 1 to 6, **characterised in that** the intake and/or through orifices (4) of the channel (5) comprise a double cylindrical bore (20, 21), one of which provides the necessary tightness, and the other, enables to fasten the accessories associated with the body (1), which fastening means comprises a keying system (30) in the form of needles, which needles are diametrically opposite in holes (29) opening into the external bore (21) and enable the said needles to co-operate with a groove (26) provided on the corresponding cylindrical section (25) of the said accessory.

8. A Supply device for a snow gun according to claim 7, **characterised in that** the keys (30) are interconnected together, forming a kind of U that can be fixed to the body by any suitable means, in particular a screw (32) serving simultaneously as a blocking member of the accessory by clamping the said using the said keys.

9. A Supply device for a snow gun according to any one of claims 7 or 8, **characterised in that** the accessory which can be associated to the body (1) has either the shape of a plug (37) or of a tubular socket (22), which enables to associate and to juxtapose two bodies (1), either in the form of a plug socket (39) that enables to associate two body (1) while separating the fluids of each body, or a T-shaped connection piece (36) or a socket (34) or an elbow (40) still.
